# EUROPEAN PATENT APPLICATION

(11) **EP 4 789 923 A1**
(43) Date of publication of application: **12.08.2026**
(21) Application number: 24946571.7
(22) Date of filing: 16.12.2024
(51) Int. Cl.: B60R 11/02, B60K 35/22, B60K 35/53, B60R 11/00

(54) **DISPLAY DEVICE AND VEHICLE**

(71) Applicant: LG Electronics Inc., Seoul 07336 (KR)
(72) Inventor: KANG, Seongbin, Seoul 06772 (KR); LIM, Seongcheol, Seoul 06772 (KR); CHANG, Sungsoo, Seoul 06772 (KR); YIM, Soohwan, Seoul 06772 (KR)
(74) Representative: Vossius & Partner Patentanwälte Rechtsanwälte mbB
(86) International application number: PCT/KR2024/020386
(87) International publication number: WO 2026/134361

(57) **Abstract**

A display device includes a display module, a driving frame connected to the display module, a driver that slidably moves the driving frame in a first direction and a second direction opposite to the first direction, a door guide formed on the driving frame and including an inclined portion that is bent in a third direction orthogonal to the first direction toward an end in the first direction, a door panel positioned adjacent to the end in the first directional of the display module, and a door lever including a first arm including a first lever roller that moves along the door guide and a second arm that comes into contact with the door panel and rotating about a lever shaft between the first arm and the second arm, wherein, while slidably moving the driving frame in the first direction, the driver moves the lever roller of the door lever along the door guide in a fourth direction opposite to the third direction, and the second arm of the door lever moves the door panel in the third direction to switch to an open state.

## Description

### TECHNICAL FIELD

The present disclosure relates to a display device which can be changed in position when necessary and is formed to be retractable or withdrawable when necessary.

### BACKGROUND

A vehicle refers to a device that drives in the direction desired by a user who rides in the vehicle. Recently, vehicles have been designed to include not only an engine and wheels for simple driving, but also various devices for the safety and convenience of vehicle users.

First, the convenience functions of vehicles have a development motive related to driver convenience such as providing an infotainment (information+entertainment) function to vehicles, supporting a partial autonomous driving function, assisting to secure a field of view (FOV) of a driver at night or in a blind spot. For example, there are functions such as active cruise control (ACC), a smart parking assist system (SPAS), a night vision (NV), a head-up display (HUD), an around view monitor (AVM), an adaptive headlight system (AHS), and the like.

The safety function, which is technology to secure drivers' safety or pedestrians' safety, includes a lane departure warning system (LDWS), a lane keeping assist system (LKAS), an autonomous emergency braking (AEB) function, and the like.

A dashboard (cluster) used to provide information on a state of the vehicle has been digitized and replaced with a display device. In addition, whereas a conventional center fascia located between a driver's seat and a passenger's seat previously only had an output function, an evolved center fascia further includes a touch function so that the evolved center fascia can function as an input device as well.

A display not only outputs information, but also has a touch sensor that allows for touch input at the same time as such information displayed, so that the display can function as both an output device and an input device at the same time, and thus a display device applicable to vehicles is gradually increasing in size.

For convenience of users of vehicles, it is desirable for a vehicle display panel to be larger in size. However, the display panel may occupy a lot of space in the vehicle when not in use. In this way, if the display panel occupies too much space in the vehicle when turned off, the display panel may be a factor that harms the efficiency of the vehicle's interior design.

There is a need for a display device that can be pulled out only when necessary to provide a screen of a sufficiently large size without compromising the vehicle's interior design efficiency.

### DISCLOSURE

### Technical Problem

An object of the present disclosure is to provide a retractable or withdrawable display device that is designed to be withdrawable when necessary or retractable when unnecessary to reduce the size of an exposed display screen.

### Technical Solution

A display device includes a display module, a driving frame connected to the display module, a driver that slidably moves the driving frame in a first direction and a second direction opposite to the first direction, a door guide formed on the driving frame and including an inclined portion that is bent in a third direction orthogonal to the first direction toward an end in the first direction, a door panel positioned adjacent to the end in the first directional of the display module, and a door lever including a first arm including a first lever roller that moves along the door guide and a second arm that comes into contact with the door panel and rotating about a lever shaft between the first arm and the second arm, wherein, while slidably moving the driving frame in the first direction, the driver moves the lever roller of the door lever along the door guide in a fourth direction opposite to the third direction, and the second arm of the door lever moves the door panel in the third direction to switch to an open state.

The display device may further include the door panel extending in the third direction, and a door back bracket extending in the second direction from the door panel.

The display device may further include a second lever roller located at an end of the second arm and moving in the first direction or the second direction on a lower surface of the door back bracket.

A length of the first arm may be less than a length of the second arm.

The first arm and the second arm may form a predetermined angle and extend obliquely from the lever shaft toward the fourth direction.

The door guide may include a straight portion, and an inclined portion positioned in the first direction of the straight portion and protruding in the third direction.

The display device may further include a flange catching and fixing the lever roller at the end in the first direction end of the inclined portion.

The display device may further include a curved portion connecting the straight portion and the inclined portion.

The display module may include a rear plate located on a back surface and connected to a driving link, and a length in the first direction of the inclined portion may be less than or equal to a distance from the door panel to the rear plate.

The display device may further include a door elastic member that pulls the door panel in the third direction, wherein the door lever applies force to the door panel in a direction that resists elasticity of the door elastic member while the door is closed.

The display module may include a first flat portion, a second flat portion, and a bendable portion positioned between the first flat portion and the second flat portion, and the bendable portion may be bent in the third direction while passing over the door panel and is located in the first direction of the door panel.

The display device may further include a housing in which the display module, the driver, the door guide, the door panel, and the door lever are accommodated, and a panel opening formed in the first direction of the housing and through which the display module passes while moving in the first direction, wherein the door panel opens and closes at least a portion of the panel opening.

The panel opening may include a first opening corresponding to a thickness of the display module and through which the display module passes, and a second opening located in the third direction from the first opening and which opens and closes the door panel.

A size of the second opening in the third direction may be greater than a thickness of a back plate located on a back surface of the display module connected to the driving link.

The second opening may have a smaller size in the fourth direction orthogonal to the first direction and the third direction than the first opening.

A vehicle includes a dashboard including a panel opening formed therein, and the display device mounted inside the dashboard, wherein the panel opening includes a first opening corresponding to a thickness of the display module, and a second opening located in the third direction from the first opening and which opens and closes the door panel.

### Advantageous Effects

According to the present disclosure, a display module of a display device may be withdrawn when necessary and accommodated when not in use.

The display device according to the present disclosure may be covered such that the driver is not exposed to the outside when stored, and thus may be aesthetically pleasing and may prevent foreign substances from entering.

The display device according to the present disclosure has a simple configuration because a separate motor for the door is unnecessary, and has an advantage of being synchronized with the movement of the display module.

Further scope of applicability of the present disclosure will become apparent from the detailed description given hereinafter. However, it should be understood that the detailed description and specific examples, while indicating preferred embodiments of the disclosure, are given by illustration only, since various changes and modifications within the spirit and scope of the disclosure will become apparent to those skilled in the art from this detailed description.

### BRIEF DESCRIPTION OF THE DRAWINGS

FIG. 1 is a view illustrating the exterior of a vehicle according to embodiments of the present disclosure.
FIG. 2 is a view illustrating the interior of a vehicle according to embodiments of the present disclosure.
FIG. 3 is a perspective view illustrating a first state of a display device according to an embodiment of the present disclosure.
FIG. 4 is a perspective view illustrating a second state of a display device according to an embodiment of the present disclosure.
FIG. 5 is a perspective view illustrating a third state of a display device according to an embodiment of the present disclosure.
FIG. 6 is an exploded perspective view illustrating a display device according to an embodiment of the present disclosure.
FIG. 7 is a diagram showing a dashboard of a vehicle according to an embodiment of the present disclosure.
FIG. 8 is a diagram showing the positions of a door and panel opening of a dashboard of a vehicle according to an embodiment of the present disclosure.
FIG. 9 is a perspective view illustrating a door module of a display device according to an embodiment of the present disclosure.
FIG. 10 is an exploded perspective view illustrating a door module of a display device according to an embodiment of the present disclosure.
FIGS. 11 to 14 are side views illustrating a driving process of a display device according to an embodiment of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

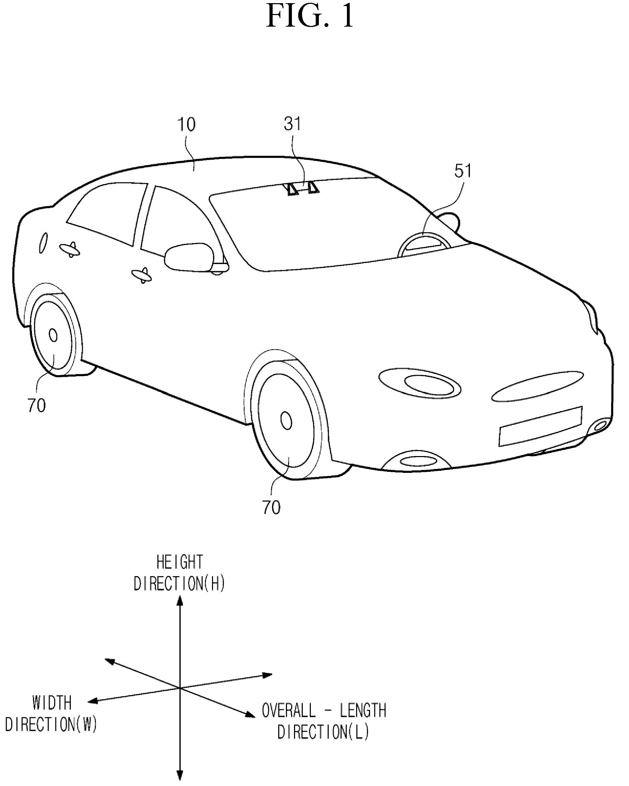

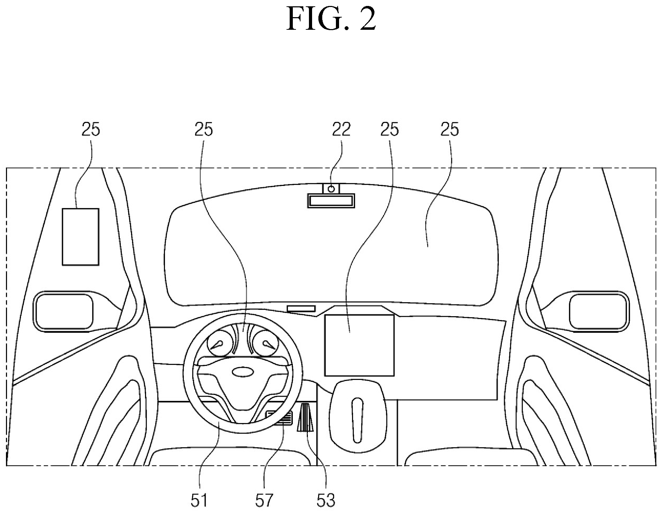

FIG. 1 is a view illustrating the exterior of a vehicle according to embodiments of the present disclosure. FIG. 2 is a view illustrating the interior of a vehicle according to embodiments of the present disclosure.

The vehicle may include wheels 70 that rotate by a power source, and may be configured with a windshield that enables a user located in the vehicle to check the front area. The interior of the vehicle may include a steering input device 51 configured to control the traveling direction of the vehicle, and an acceleration input device 53 and a brake input device 57 which are configured to control the speed of the vehicle.

The steering input device 51 may receive a user's input signal as to the traveling direction of the vehicle 10. It is preferable that the steering input device 51 be formed in the form of a steering wheel so that steering input can be performed by rotation. According to an embodiment, the steering input device may also be formed in a shape of a touchscreen, a touchpad, or a button.

The acceleration input device 50 may receive a user's input signal for accelerating the vehicle 10. The brake input device 57 may receive a user's input signal for decelerating the vehicle 10. It is preferable that the acceleration input device 53 and the brake input device 57 be formed in the shape of a pedal. Depending on the embodiment, the acceleration input device or the brake input device may also be formed in the shape of a touchscreen, a touchpad, or a button.

The vehicle may operate in a manual mode in which the user controls the driving direction of the vehicle by operating the steering device, the acceleration input device, and the brake input device. Alternatively, the vehicle may switch to an autonomous driving mode based on information and data provided from the external device and other information about surrounding objects, so that the driving system can drive autonomously without user's manipulation.

The vehicle may include a communication device configured to receive information and data from an external device. The communication device is a device for communicating with an external device. Here, the external device may be another vehicle, a mobile terminal, or a server.

The communication device may include at least one of a transmission (Tx) antenna, a reception (Rx) antenna, a radio frequency (RF) circuit and RF element(s) capable of implementing various communication protocols.

The communication device may include a short-range communication unit, a location information unit, a V2X communication unit, an optical communication unit, a broadcast transceiver, and a processor.

The vehicle may include an object detection device to obtain information about surrounding objects.

The objects may include lanes, other vehicles, pedestrians, two-wheeled vehicles, traffic signals, lights, roads, structures, speed bumps, terrain features, animals, etc. The object detection devices may include cameras, radars, lidars, ultrasonic sensors, and infrared (IR) sensors.

The driving system serving as a system that controls various operations of the vehicle may operate in an autonomous driving mode. In a manual mode, the driving system may assist the user's manipulation.

The driving system may include a processor, and may control the power source and the wheels 70 based on various kinds of information received from the object detection device and the communication device.

The vehicle may include a user interface (UI) device for communicating with the user. The user interface device may receive a user input, and may provide the user with information generated by the vehicle 10.

The user interface device may include an input unit, an internal camera 220, a biometric detection unit, an output unit 25, and a processor. Depending on the embodiment, the user interface (UI) device may include other components in addition to the above-described components, or may not include some of the above-described components.

The output unit 25 may generate output signals related to a visual sense, an auditory sense, or a tactile sense. The output unit 25 may include at least one of a display device and an audio output unit, and may display graphics corresponding to various kinds of information through the display device. The display device may include a display panel including one of a liquid crystal display (LCD), a thin film transistor liquid crystal display (TFT LCD), an organic light emitting diode (OLED), and a flexible display.

As the display panel becomes thinner and the shape of the display panel is diversified, the output unit may increase in size and the arrangement position of the output unit may be diversified. In addition, the display device is layered with a touch sensor configured to recognize a user's touch, so that the output unit can function as an input unit as well.

Typically, display device(s) may be placed on the steering wheel, a dashboard (instrument panel), seat(s), a pillar, door(s), a center console, a headlining, a sun visor, a windshield, etc. where the input unit is located. Accordingly, the display device applicable to the vehicle is gradually increasing in size.

It is preferable for the size of the display panel 410 to increase for convenience of use. In contrast, the display panel 410 may occupy a large area in the vehicle when not in use and may occupy too much space in the vehicle when turned off, so that the display panel 410 may cause damage to the interior design of the vehicle.

There is a need for a display device that can be pulled out only when necessary so that a sufficiently large screen can be provided to the vehicle without harming the interior design elements of the vehicle.

Accordingly, the present disclosure provides a display device that can be pulled out when necessary and retracted (inserted) when unnecessary to reduce the size of the exposed screen. Although the display device according to the present disclosure has been described as being mounted in a vehicle, other implementations are also possible, and it should be noted that the display device can also be installed not only in a mode of a transport other than a vehicle, but also in a fixed place.

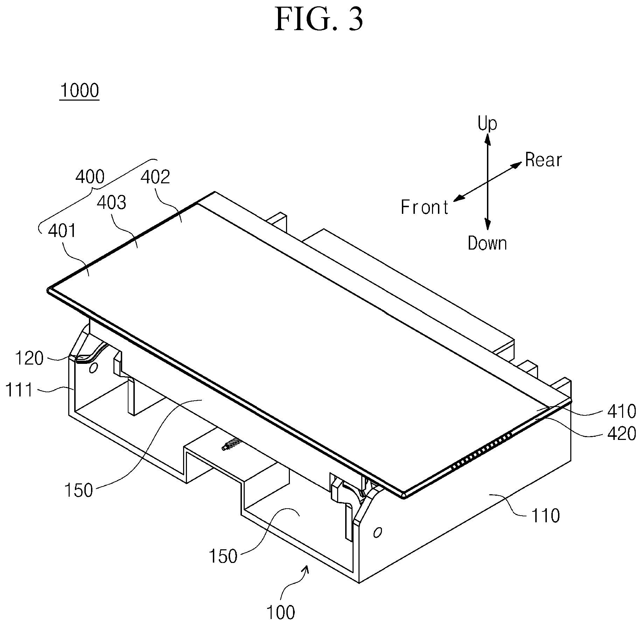

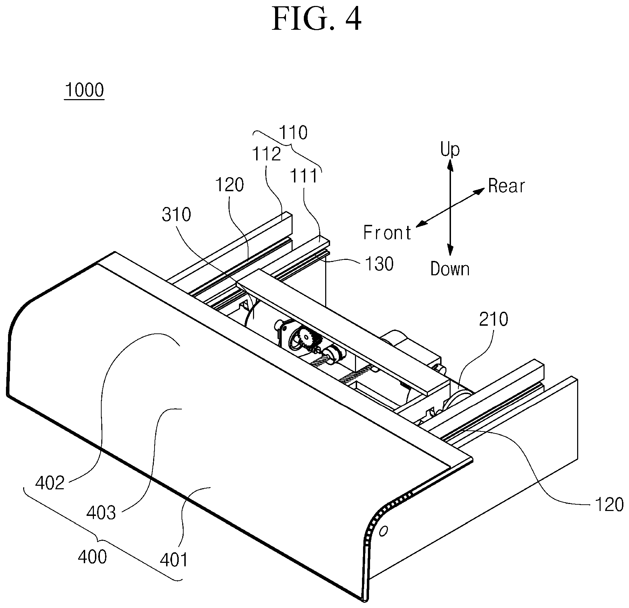

FIG. 3 is a perspective view illustrating a first state of the display device 1000 according to an embodiment of the present disclosure. FIG. 4 is a perspective view illustrating a second state of the display device 1000 according to an embodiment of the present disclosure.

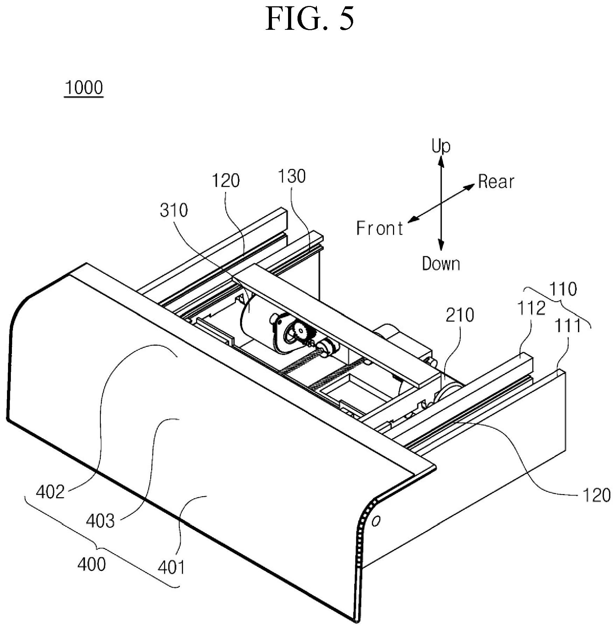

FIG. 5 is a perspective view illustrating a third state of the display device 1000 according to an embodiment of the present disclosure. FIGS. 3 to 5 are perspective views of the display device when viewed obliquely from above. In FIGS. 3 to 5, the left lower end of each drawing indicates the front direction. For convenience of description, the expression "front direction" will hereinafter be referred to as a "first direction".

The display device 1000 according to the present disclosure may include a base module 100 fixed to a vehicle, etc., and a display module 400 movable on the base module 100. The display module 400 may include a flexible display panel 410, and may be bent and deformed as shown in FIGS. 4 and 5.

The display module 400 may include a first flat portion 401 and a second flat portion 402 that maintain a flat state, and may include a bendable portion 403 disposed between the first flat portion 401 and the second flat portion 402. A flat portion disposed in the first direction will hereinafter be referred to as the first flat portion 401, and a flat portion disposed in the opposite direction to the first direction will hereinafter be referred to as the second flat portion 402.

In order to implement the bendable portion 403, the display module 400 may use a flexible display panel 410 such as an organic light emitting diode (OLED) panel capable of bending deformation, and the first flat portion 401, the second flat portion 402, and the bendable portion 403 may be distinguished from each other by the rear surface structure of the display panel 410.

Each of the first flat portion 401 and the second flat portion 402 may include a flat rear surface support structure for fastening a driver or a guide structure that provides power to drive the display module 400. As illustrated in FIG. 3, the bendable portion 403 supports the rear surface of the display panel 410 with a plurality of bending bars 423 extending in the horizontal direction, and an angle between the bending bars 423 may change, and a curvature of the bendable portion 403 may also change.

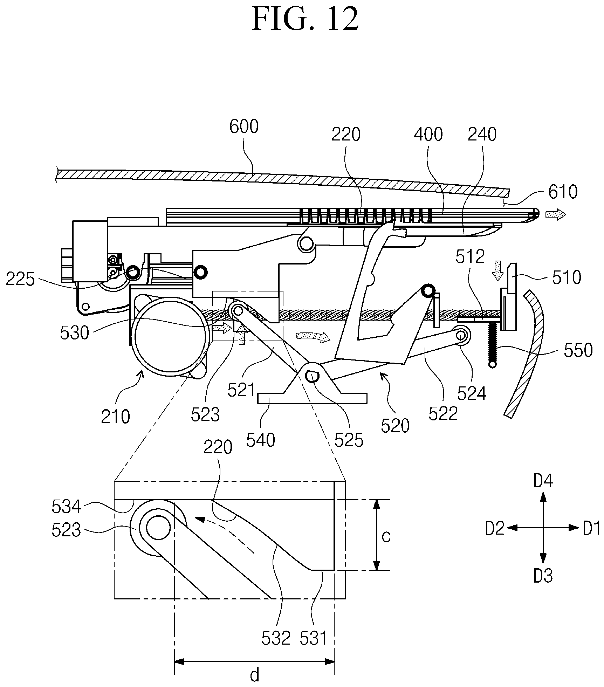

The display device 1000 may include a housing 500 (see FIG. 12) in which the display device 1000 is accommodated, and the housing 500 may have a panel opening 510 (see FIG. 12) formed in a first direction of the display device 1000 so that the display module 400 can pass through the panel opening 510. The display device 1000 according to the present disclosure may be inserted (retracted) and withdrawn through the panel opening 510 and may be optionally exposed to a user.

The first state illustrated in FIG. 3 may be a state in which the display module 400 is accommodated in the housing and is not in use. The second state illustrated in FIG. 4 is a state in which only a part of the display module 400 including the first flat portion 401 is exposed through the opening 510. Unlike the first flat portion 401 and the first state, in the second state, the display module 400 is located to face downward.

Here, the downward direction may be referred to as a second direction to be distinguished from the first direction described above, and the second direction may be at an angle close to 90° with respect to the first direction, but is not necessarily limited thereto, and the second direction is bent to face a different direction from the first direction.

The second state is a state in which the angle between the first flat portion 401 and the second flat portion 402 in the first state becomes smaller, and the bendable portion 403 is bent with a predetermined curvature, and the display module 400 may move in the first direction so that the display module 400 can be pulled out through the panel opening 510.

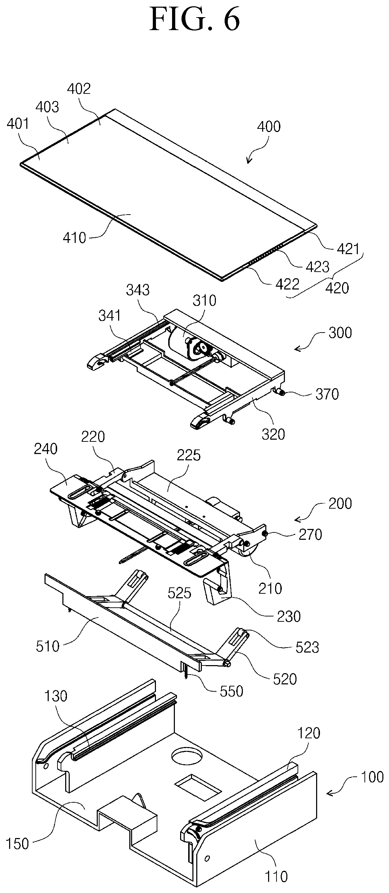

The third state is a state in which the display module 400 is further withdrawn from the second state, and the area facing the second direction is larger in size. The second state in which only a part of the display module 400 is withdrawn may be referred to as a half screen, and the state in which the display module 400 is withdrawn to the maximum may be referred to as a full screen. FIG. 6 is an exploded perspective view illustrating the display device 1000 according to one embodiment of the present disclosure. Referring to FIG. 6, the display device 1000 may include a base module 100, a bending module 200, a slide module 300, and a display module 400.

The base module 100 may be fixed to a vehicle, etc., and may include a guide wall 110 formed with rails (120, 130) for guiding the movement of the bending module 200 and the slide module 300 as a driver. Although the guide wall 110 can be provided alone, the scope or spirit of the present disclosure is not limited thereto, and the guide wall 110 may be implemented as one pair of guide walls 110 spaced apart from each other in the side direction so that the display module 400 can move in a horizontally balanced manner.

The base plate 150 interconnecting the guide walls 110 may form the bottom surface of the display device 1000, and the first driver 210 of the bending module 200 may be mounted on the base plate 150.

The rails (121, 122, 123, 130) formed on the guide wall 110 may be implemented as a plurality of rails, and may be configured with a first guide wall 111 and a second guide wall 112 to prevent the plurality of rails (121, 122, 123, 130) from overlapping each other.

The display module 400 may include a bending module 200 and a slide module 300 for transitioning from a first state to a second state and from a second state to a third state or vice versa.

The bending module 200 pushes the first flat portion 401 of the display module 400 in the first direction to transition from the first state to the second state, and at the same time changes the angle of the first flat portion 401, thereby inducing bending deformation of the bendable portion 403. The bending module 200 may include a rear plate 240, a rotary arm 230, a bending link 220, and a first driver 210.

The rear plate 240 may be coupled to the rear surface of the first flat portion 401 of the display module 400. The rear plate 240 transmits the driving force of the bending module 200 to the first flat portion 401 through a pin-slot coupling to the first flat portion 401, while not interfering with the driving of the slide module 300.

When the bending module 200 is driven, the arrangement direction of the first flat portion 401 may change, and when the slide module 300 is driven, the display module 400 may slide independently of the rear plate 240 to transition from the second state to the third state.

The rotary arm 230 may extend at a predetermined angle to the rear plate 240. When the rotary arm 230 rotates and the arrangement direction thereof changes, the arrangement of the rear plate 240 changes, so that transition from the first state to the second state can be performed.

The rotary arm 230 may include a plurality of bending guide pins. The bending guide pins are protrusions that are inserted into the bending guide rail 120 formed on the guide wall 110 and move along the bending guide rail 120. A bearing or a roller may be provided in the rotary arm 230, and may rotate on the outer surface of the rotary arm 230 so that the rotary arm 230 can easily move along the bending guide rail 120.

The rotary arm 230 may be rotatably connected to one end of the bending link 220 through the rotary shaft 250. The rotary arm 230 receives power from the first driver 210 through the bending link 220 and rotates independently of the bending link 220, thereby inducing bending deformation of the variable unit 403.

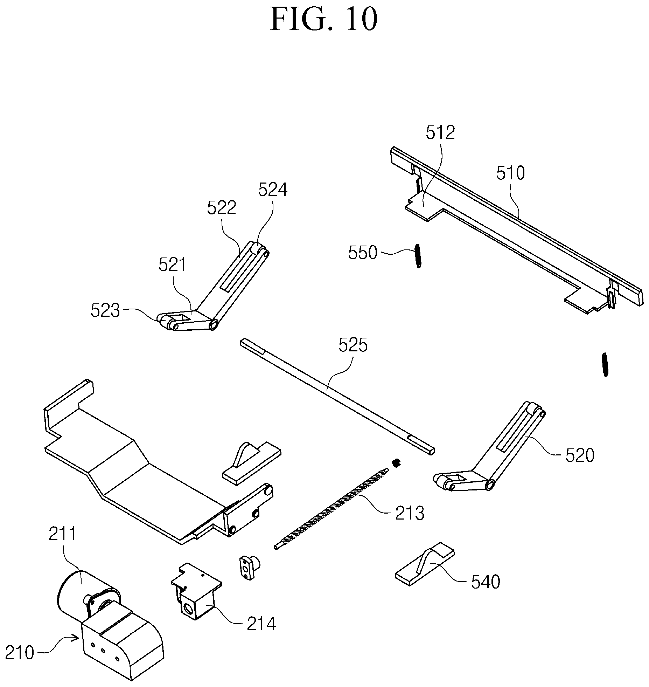

The first driver 210 may be fixed to the base module 100 and, referring to FIG. 10, may include a first motor 211, a first gear block, a first ball screw 213, and a first driving nut 214. The bending module may include a first gear block that transmits the rotational power of the first motor 211 to the first ball screw 213. When the first ball screw 213 extending in the first direction rotates, the first drive nut 214 through which the first ball screw 213 passes moves in the extension direction of the first ball screw 213 and the first-directional position may be changed.

The first drive nut 214 is fastened to the drive frame 225, and the drive frame 225 may include a second slide pin 270 fastened to the slide rail 130 formed on the guide wall 110 so that the driving frame 225 can be driven only in the first direction.

The slide rail 130 along which the second slide pin 270 moves may be configured to move along the same slide rail 130 as the first slide pin 370 that guides the first-directional slide movement of the slide module 300.

The bending link 220 provides the rotary arm 230 with the driving force of the first driver 210 so that the rotary arm 230 can move in the first direction of the first driver 210 or can move in the third direction opposite to the first direction. The rotary arm 230 may convert the driving force of the first driver 210 provided in a linear direction into a rotational movement through the bending guide rail 120 and the bending guide pin 260.

The slide module 300 may include the first slide pin 370 that moves along the slide rail 130. The slide rail 130 may be formed on the second guide wall 112 such that a path of the slide pin 370 does not overlap driving of the rotary arm 230.

When the slide module 300 transitions from the second state to the third state, the slide module 300 pushes the second flat portion 402 of the display module 400 in the first direction so that the first flat portion 401 moves further in the second direction, thereby increasing the exposed area of the display module 400.

The slide module 300 may include a slide frame 320 connected to the bending link 220 of the bending module 200 through a rotary shaft 250, and a second driver 310 fixed to the slide frame 320.

The display panel 410 may include a first flat portion 401, a second flat portion 402, and a bendable portion 403 disposed therebetween. The bending module 200 provides power to the first flat portion 401, and the slide module 300 provides power to the second flat portion 402.

The panel cover 420 located on the rear surface of the flexible display panel 410 may include a first flat portion 401, flat covers (421, 422) supporting the rear surface of the second flat portion 402, and a plurality of bending bars 423 located on the rear surface of the bendable portion 403.

The bendable portion 403 has a plurality of bending bars 423 extending in a horizontal direction to support the rear surface of the display panel 410, and the angle between the bending bars 423 may change, and the curvature of the bendable portion 403 may also change. The bending bars 423 may be connected to neighboring bending bars 423 using a flexible material.

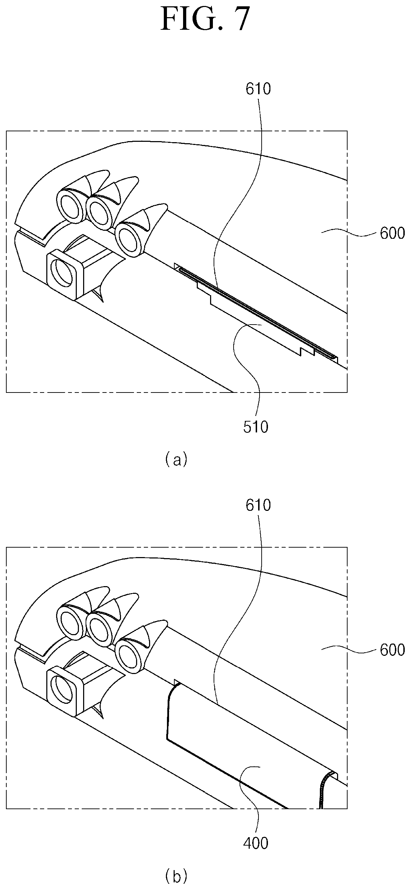

FIG. 7 is a perspective view illustrating an embodiment in which the display device 1000 is mounted in a vehicle according to an embodiment of the present disclosure.

The display device 1000 according to the present disclosure may include a housing 600 in which the display module 400 and the driving components 100 to 300 are accommodated. The display module 400 may be retracted and withdrawn to and from the housing 600 and may include a panel opening 610 that extends to be horizontally long for the display module 400 to be retracted and withdrawn.

A first direction D1 in which a driving frame 225 moves when the display module 400 is withdrawn may be a front side toward a user, and a third direction D3 and a fourth direction D4 may be downward and upward directions orthogonal to the first direction, or the first direction D1 may extend upward and the third direction may extend horizontally. Depending on the arrangement of the display module 400, the direction of a panel opening 610 may also vary.

For convenience of explanation, the following description will be based on the display device 1000 mounted on a vehicle. The housing of the display device 1000 mounted on the vehicle may be a dashboard 600 located in front of a driver.

The display device 1000 may be retracted and withdrawn through the panel opening 610 formed in the dashboard 600. The display device 1000 may be located inside the dashboard 600 in the first state and may not be visible to the user as shown in (a) of FIG. 6, and may be withdrawn in the second and third states and switched to a state as shown in (b) of FIG. 6.

In the display device 1000 according to the present disclosure, the display module 400 may be located in a flat state in the first state as shown in FIG. 3, and to switch to the second state, the bendable portion 403 may be bent, and the display module 400 may be withdrawn forward and may be exposed to the outside through the panel opening 610 of the dashboard 600. In the third state, the display module 400 is driven, the bent portion oft he bendable portion 403 changes, and an area of the display module 400 exposed to the front increases.

In the display device 1000 according to the present disclosure, the length of the panel opening 610 in the thickness direction needs to be increased such that the bendable portion may be bent and withdrawn and components such as a rear plate 240 coupled to a back surface of the display module 400 for a sliding operation of the display device 1000 may pass.

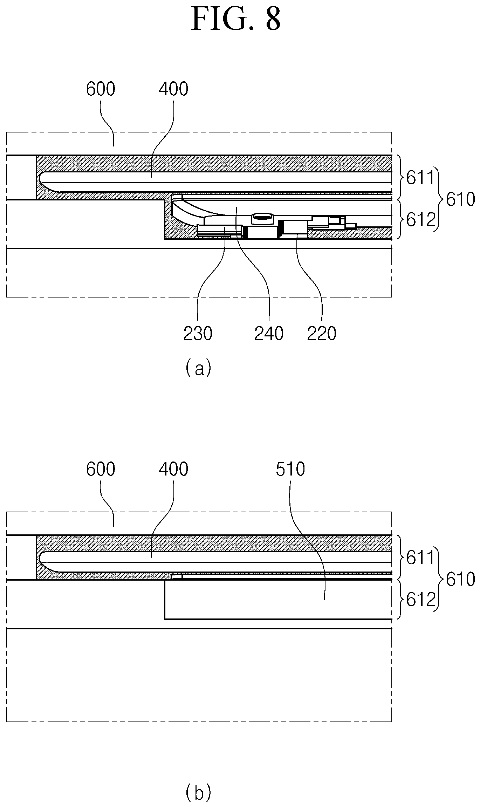

FIG. 8 is a diagram showing the positions of a door and panel opening 610 of the dashboard 600 of a vehicle according to an embodiment of the present disclosure. As shown in (a) of FIG. 8, the panel opening 610 is larger than the thickness of the display module 400, and thus there is a problem that the driving structure of a rear surface of the display device 1000 and the inside of the dashboard 600 are visible.

Accordingly, the present disclosure may include a door module 500 including a door panel 510 covering the panel opening 610 as shown in (b) of FIG. 8. The door panel 510 according to the present disclosure may cover only a portion of the panel opening 610.

The positions of the display module 400 and the panel opening 610 need to be aligned to enable retraction and withdrawal of the display module 400, and thus an end of the display module 400 in the first direction D1 may be positioned in the panel opening 610 even in the first state.

The door module 500 according to the present embodiment may cover only a portion of the panel opening 610, and the display module 400 may be formed to pass through the panel opening 610 while being inserted into the panel opening 610.

The panel opening 610 may include a first opening 611 through which the display module 400 passes and a second opening 612 located in a third direction of the first opening 611. The second opening 612 allows a bending link and hinge arm of the rear plate 240 located on the back surface of the display module 400 to pass through.

The size of the first opening 611 corresponds to the width and thickness of the display module 400, and the second opening 612 may be the same as the width of the first opening 611, but may have a width corresponding to the width of the rear plate 240. The sizes of the first opening 611 and the second opening 612 may be different from each other. For convenience of explanation, the first opening 611 and the second opening 612 are described as being separated from each other, but the first opening 611 and the second opening 612 are connected to form one opening (panel opening 610).

The door panel 510 is not limited to the present embodiment, and the door module 500 may also have a form that covers the entire panel opening 610.

The display device 1000 according to the present disclosure may be mounted on a device other than the dashboard 600, and the housing forming an outer appearance of the display device 1000 may be the same as the dashboard 600 in that the panel opening 610 opened and closed by the door panel 510 is provided, but may have a different shape from the dashboard 600.

The door module 500 may include a door driver that moves the door panel 510 in the third direction to open the second opening 612 of the panel opening 610. The door driver may be moved vertically using a motor or the like, but adding a separate motor may increase the cost and increase the volume of the display device 1000.

The door driver needs to be driven simultaneously with the driving of the display module 400, and thus needs to operate in synchronization with the driver 210 that drives the display module 400.

To reduce the volume of the display device 1000 and enable synchronization with the driver 210 of the display device 1000, the present disclosure may drive the door panel 510 by receiving power from the first driver that moves the display module 400 without an additional motor.

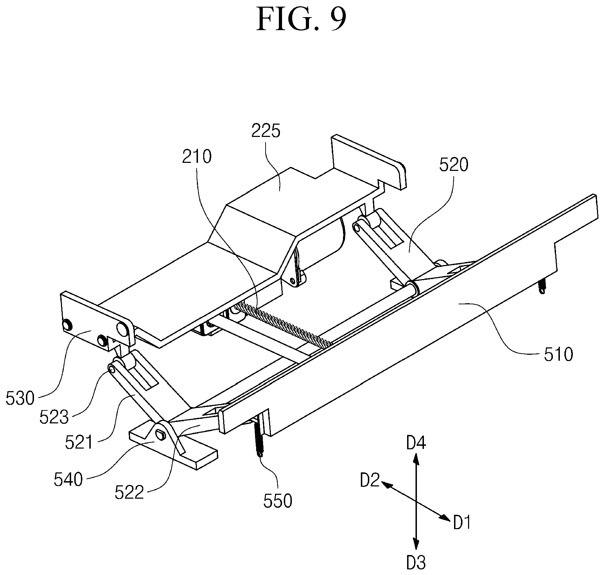

FIG. 9 is a perspective view illustrating the door module 500 of the display device 1000 according to an embodiment of the present disclosure, and FIG. 10 is an exploded perspective view illustrating the door module 500 of the display device 1000 according to an embodiment of the present disclosure.

The door module 500 according to the present disclosure may include the door panel 510, a door lever 520, and a door guide 530 that guides the movement of the door lever 520.

As shown in FIG. 9, the door guide 530 is formed on the driving frame 225, and the door guide 530 according to the present embodiment is formed on a lower portion of a side wall of the driving frame 225. The door guide 530 may also be formed in the form of a rail on the side wall of the driving frame 225.

The door guide 530 may include an inclined portion 531 protruding in a third direction (lower side in the drawing) at an
end in the first direction D1 and a straight portion 534 extending horizontally in the second direction from an upper end of the inclined portion 531.

The door lever 520 may include a first arm 521 that is rotatably fixed to a lever fixing portion 540 fixed to the base 100 by a lever shaft 525 and a second arm 522 extending in a second direction D2 and a second arm 522 extending in a second direction D2. The first arm 521 and the second arm 522 may be straight or may have a V-shaped bend as shown in FIG. 9.

The door lever 520 may include a first lever roller 523 that moves along the door guide 530 at an end of the first arm 521, and when the first lever roller 523 is positioned at the inclined portion 531, an end of the second arm 522 may move in an opposite direction to the movement of the first lever roller 523.

The end of the second arm 522 may be connected to the door panel 510 and may be hinged to the door panel 510, but the end of the second arm 522 may move along an arc based on the lever shaft 525, and thus the door lever 520 may include a second lever roller 524 that slides on the door panel 510 to transmit only vertical force to the door panel 510.

The second lever roller 524 may include a door back bracket 512 that protrudes horizontally in the second direction D2 from the door panel 510. The second lever roller 524 moves in the first direction D1 or the second direction D2 along a lower surface of the door back bracket 512, and the vertical movement of the second arm 522 is transmitted to driving of the door panel 510, and the horizontal movement induces a change in position on the back bracket 512.

The door lever 520 may be connected in pairs on the left and right sides of the door panel 510, and the first lever roller 523 may move along the door guide 530 formed on the driving frame 225, and thus the door levers 520 may move simultaneously in synchronization.

The driving frame 225 in which the door guide 530 according to the present disclosure is formed may move in the first direction when the display module 400 is withdrawn to move the display module 400, and thus the movement of the door panel 510 may be synchronized with the movement of the display module 400.

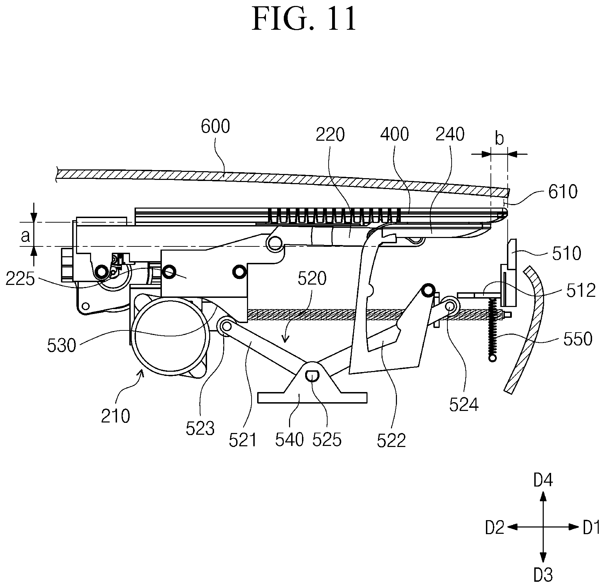

FIGS. 11 to 14 are side views illustrating a driving process of the display device 1000 according to an embodiment of the present disclosure. Hereinafter, an aspect of driving of a door module according to the movement of the display module 400 and the driving frame 225 will be described step by step with reference to FIGS. 11 to 14.

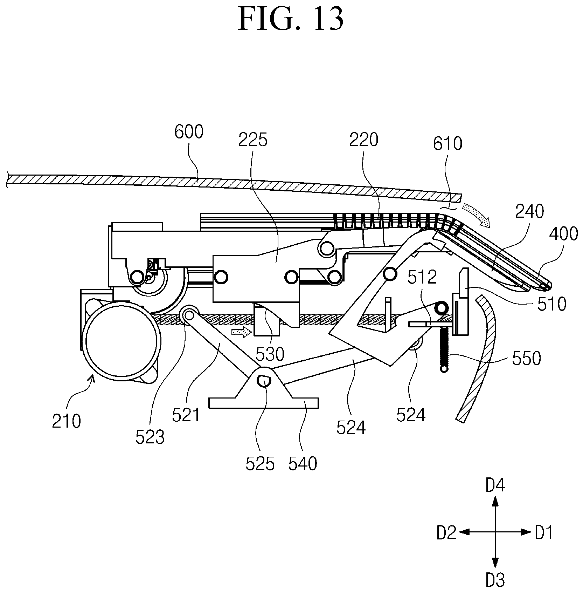

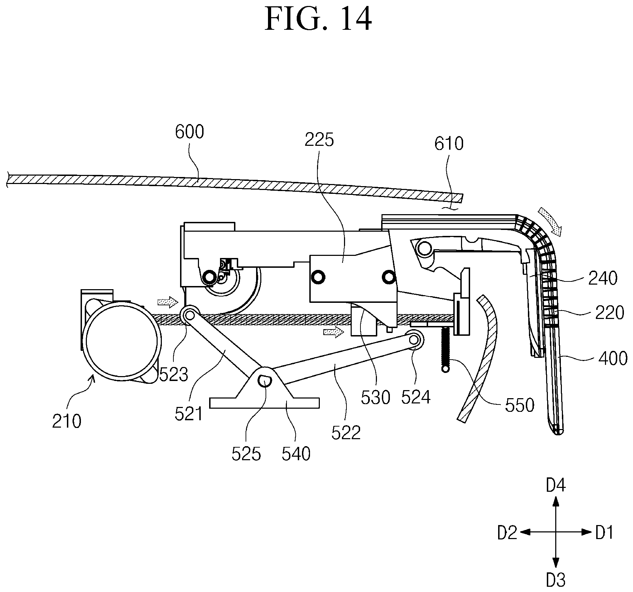

FIG. 11 illustrates a first state in which the display module 400 is arranged in a flat state, FIG. 14 illustrates a second state in which the bendable portion 403 is bent such that the first flat portion 401 faces forward, and FIGS. 12 and 13 illustrate a state of the door module 500 during a transition from the first state to the second state.

As shown in FIG. 11, in the first state, the display module 400 is located inside the housing (dashboard 600), and the door panel 510 covers the panel opening 610.

The driving frame 225 is located in the second direction D2, and the first lever roller 523 of the door lever 520 is located at the end of the door guide 530 in the first direction D1. An end of the door guide 530 in the first direction D1 may protrude in a third direction, and thus the first arm 521 of the door lever 520 may be pressed downward, and the second lever roller 524 located at the end of the second arm 522 may push upward and support the door panel 510.

As shown in FIG. 11, the length of the first arm 521 of the door lever 520 may be greater than that of the second arm 522, and the protrusion amount of the inclined portion 531 of the door guide 530 is limited, and thus the movement of the door panel 510 is greater than the movement of the first arm 521.

As the first motor 211 starts to move, the driving frame 225 slides in the first direction D1. As shown in FIG. 12, the first lever roller 523 passes over the inclined portion 531 of the door guide 530 and moves to the straight portion 534, and the end of the first arm 521 moves in an upward direction D4 and the second end moves in a downward direction D3.

A door elastic member 550 that pulls the door panel 510 in the third direction D3 may be further provided. The door elastic member 550 provides elasticity in a direction of pulling the door panel 510 in the third direction to open the panel opening 610. When the door lever 520 supports the door panel 510 in a direction that resists the elasticity of the door elastic member 550 and then the driving frame 225 moves in the first direction D1, the door lever 520 may rotate as shown in FIG. 12, and the door panel 510 moves in the third direction D3 due to the elasticity of the door elastic member 550.

When the door guide 530 is in the form of a rail, the movement of the door lever 520 is determined according to the height of the door guide 530, but the door guide 530 according to the present embodiment is formed on the lower surface of the driving frame 225 and has an open lower end.

Therefore, the end of the second arm 522 of the door lever 520 may be pressed downward by the force that presses the door panel 510 in the third direction by the door elastic member 550, and the first arm 521 may attach the first lever roller 523 to the door guide 530 to move according to the height of the door guide 530.

Referring to FIG. 12, a space between the inclined portion 531 and the straight portion 534 may include a curved surface 533 for stable movement of the first lever roller 523. The end of the inclined portion 531 may include a horizontally bent flange 531 to stably fix the door lever 520 such that the door panel 510 may be maintained closed in the first state.

When the driving frame 225 starts to move in the first direction D1, the first lever roller 523 is deviated from the flange 531 and passes over the inclined portion 531 and moves to the straight portion 534. The inclined portion 531 may have a steep slope and have a horizontal length d greater than a vertical length c.

The door panel 510 needs to move in the third direction before the rear plate 240 passing through the second opening 612 covered by the door panel 510 touches the door panel 510. In the first state of FIG. 11, the length d of the inclined portion 531 in the first direction D1 may be equal to or less than a distance b between the door panel 510 and the rear plate 240.

As shown in FIG. 13, when the bendable portion 403 of the display module 400 is bent, the display module 400 may protrude outward from the dashboard 600, and the first lever roller 523 may move along the straight portion 534. However, the length of the driving frame 225 is limited, and thus the first lever roller 523 may be separated from the door guide 530 as shown in FIG. 14.

When the display module 400 switches from the second state to the first state, a lower side of the door guide 530 is open, and thus the first door lever 520 may easily come into contact with the straight portion 534 of the door guide 530 again and move along the door guide 530.

However, when the first lever roller 523 deviates from the door guide 530, if the door elastic member 550 pulls the door panel 510 lower than the state of FIG. 13, it may be difficult for the first lever roller 523 to re-enter the door guide 530.

Therefore, provided is a door stopper (not shown) that limits the elasticity of the door elastic member 550 to limit the movement distance of the door panel 510 in the third direction D3 or located at the lower end of the door panel 510.

As described above, the display device 1000 according to the present disclosure may withdraw the display module 400 when necessary and store the display module 400 when not in use.

The display device 1000 according to the present disclosure may be covered such that the driver is not exposed to the outside when stored, and thus may be aesthetically pleasing and may prevent foreign substances from entering.

The display device 1000 according to the present disclosure has a simple configuration because a separate motor for the door module 500 is unnecessary, and has an advantage of being synchronized with the movement of the display module 400.

The above detailed description should not be construed as being limitative in all terms, but should be considered as being illustrative. The scope of the present disclosure should be determined by reasonable analysis of the accompanying claims, and all changes in the equivalent range of the present disclosure are included in the scope of the present disclosure.

### Mode for Implementing the Disclosure

Various embodiments for implementing the present disclosure have been described in detail in the previous table of contents.

### Industrial Applicability

The present disclosure is applicable to technology directly or indirectly related to display devices and vehicles, and thus its industrial applicability is recognized.

## Claims

1. A display device comprising:
a display module;
a driving frame connected to the display module;
a driver that slidably moves the driving frame in a first direction and a second direction opposite to the first direction;
a door guide formed on the driving frame and including an inclined portion that is bent in a third direction orthogonal to the first direction toward an end in the first direction;
a door panel positioned adjacent to the end in the first directional of the display module; and
a door lever including a first arm including a first lever roller that moves along the door guide and a second arm that comes into contact with the door panel and rotating about a lever shaft between the first arm and the second arm,
wherein, while slidably moving the driving frame in the first direction, the driver moves the lever roller of the door lever along the door guide in a fourth direction opposite to the third direction, and the second arm of the door lever moves the door panel in the third direction to switch to an open state.

2. The display device of claim 1, further comprising:
the door panel extending in the third direction;
a door back bracket extending in the second direction from the door panel; and
a second lever roller located at an end of the second arm and moving in the first direction or the second direction on a lower surface of the door back bracket.

3. The display device of claim 1, wherein a length of the first arm is less than a length of the second arm.

4. The display device of claim 1, wherein the first arm and the second arm form a predetermined angle and extend obliquely from the lever shaft toward the fourth direction.

5. The display device of claim 1, wherein the door guide includes:
a straight portion; and
an inclined portion positioned in the first direction of the straight portion and protruding in the third direction.

6. The display device of claim 5, further comprising a flange catching and fixing the lever roller at the end in the first direction end of the inclined portion.

7. The display device of claim 5, further comprising a curved portion connecting the straight portion and the inclined portion.

8. The display device of claim 5, wherein the display module includes a rear plate located on a back surface and connected to a driving link, and
a length in the first direction of the inclined portion is less than or equal to a distance from the door panel to the rear plate.

9. The display device of claim 1, further comprising a door elastic member that pulls the door panel in the third direction,
wherein the door lever applies force to the door panel in a direction that resists elasticity of the door elastic member in a closed state.

10. The display device of claim 1, wherein the display module includes a first flat portion, a second flat portion, and a bendable portion positioned between the first flat portion and the second flat portion, and
the bendable portion is bent in the third direction while passing over the door panel and is located in the first direction of the door panel.

11. The display device of claim 1, further comprising:
a housing in which the display module, the driver, the door guide, the door panel, and the door lever are accommodated; and
a panel opening formed in the first direction of the housing and through which the display module passes while moving in the first direction,
wherein the door panel opens and closes at least a portion of the panel opening.

12. The display device of claim 11, wherein the panel opening includes:
a first opening corresponding to a thickness of the display module and through which the display module passes; and
a second opening located in the third direction from the first opening and which opens and closes the door panel.

13. The display device of claim 12, wherein a size of the second opening in the third direction is greater than a thickness of a back plate located on a back surface of the display module connected to the driving link.

14. The display device of claim 13, wherein the second opening has a smaller size in the fourth direction orthogonal to the first direction and the third direction than the first opening.

15. A vehicle comprising:
a dashboard including a panel opening formed therein; and
the display device of one of claims 1 to 10 mounted inside the dashboard,
wherein the panel opening includes:
a first opening corresponding to a thickness of the display module; and
a second opening located in the third direction from the first opening and which opens and closes the door panel.
